# EUROPEAN PATENT APPLICATION

(11) **EP 4 242 781 A2**
(43) Date of publication of application: **13.09.2023**
(21) Application number: 23157408.8
(22) Date of filing: 17.02.2023
(51) Int. Cl.: G05G 1/06, G05G 9/047, E02F 9/20

(54) **A COVER ASSEMBLY**

(30) Priority: 17.02.2022 GB 202202127
(71) Applicant: J.C. Bamford Excavators Limited, Uttoxeter Staffordshire ST14 5JP (GB)
(72) Inventor: Socha, David Stefan, Uttoexeter, ST14 5JP (GB); Wild, Paul, Uttoxeter, ST14 5JP (GB); Beloe, Neil, Uttoxeter, ST14 5JP (GB)
(74) Representative: Foot, Paul Matthew James

(57) **Abstract**

A cover assembly (204) for a control member (202), such as a joystick, for controlling a vehicle, the control member comprising a shaft (206) configured to be graspable by an operator's hand, the cover assembly comprising: a cover body (208) configured to encase the shaft, and comprising an external surface (208e); and a heating system (24') configured to heat the external surface of the cover body, the heating system comprising an electrical heating device (26'), such as a heating element.

## Description

### FIELD

The present teachings relate to a cover assembly for a control member, such as a joystick, and a control system for a vehicle. In addition, the present teachings relate to a spinner knob for mounting to a steering wheel of a vehicle.

### BACKGROUND

In vehicles in which the prime mover is an internal combustion engine, air within the interior of the vehicle can typically be heated via surplus heat emanating from the engine. However, wholly electrically powered vehicles having an electrically powered prime mover, such as an electric motor, usually do not emit enough surplus heat to sufficiently heat the air within the interior of the vehicle. As such, the vehicle is required to use electrical energy for interior heating. It will be appreciated that using conventional electrical heaters to heat the air inside the vehicle's interior for long periods of time will rapidly deplete the energy stored onboard the vehicle, for example in the vehicle's batteries. This in turn reduces the energy available to power the primary function of the vehicle such as transporting a cargo or, for working machines, handling materials or excavating. As batteries are expensive and relatively less energy dense than fossil fuels, providing batteries with enough energy for these primary functions, and the secondary heating function is uneconomic and impractical in many circumstances.

It is known to electrically heat the seats and the steering wheel of a vehicle in order to directly warm an operator of the vehicle. However, heating either the seats or the steering wheel of a vehicle can also consume relatively large amounts of electrical energy due to the size of these components.

The present teachings seek to overcome or at least mitigate one or more problems associated with the prior art.

### SUMMARY

According to a first aspect of the present teachings, there is provided a cover assembly for a control member, such as a joystick, for controlling a vehicle, the control member comprising a shaft configured to be graspable by an operator's hand. The cover assembly comprises: a cover body configured to encase the shaft, in use, and comprising an external surface; and a heating system configured to heat the external surface of the cover body. The heating system comprises an electrical heating device, such as a heating element.

Warming the hands of a vehicle operator is an efficient way of directly warming the operator since this will directly affect the operator's body temperature through vasodilation. As such, since it is likely that a vehicle operator will spend a significant proportion of their time operating a vehicle with a hand on a control member to control an operation of the vehicle, heating the external surface of the cover body will be beneficial for the thermal comfort of the operator. Moreover, if the vehicle is wholly electrically powered, heating the cover body to improve the thermal comfort of the operator is likely to be relatively more energy efficient compared to heating the air within the interior of the vehicle via conventional electric heaters. It may additionally be more efficient for vehicles which lack an enclosed cab, and therefore for which heating the air is impractical.

The cover body may be at least partially substantially rigid.

Advantageously, a rigid cover body may help to enhance the durability of the cover body. Moreover, a rigid cover body may help the cover body appear as part of the cover member, and thus appear less conspicuous.

The cover body may be formed from a substantially rigid, e.g. polymeric, material.

The cover body may comprise an opening for a head portion of the control member to extend therethrough.

Advantageously, the opening may allow an operator to access control inputs on a head of a control member to which the cover assembly is applied.

The cover body may be formed from at least two cover sections configured to be secured together around the shaft so as to encase the shaft, in use.

By forming the cover body from at least two cover sections configured to be secured together around the shaft so as to encase the shaft, the cover body may be more easily retrofitted to a control member of a vehicle.

The opening may be formed when the at least two cover sections are secured together.

The cover sections may be configured to be releasably secured together, e.g. via one or more mechanical fasteners or clips.

Advantageously, such a configuration helps to simplify assembly and disassembly of the cover assembly.

The cover body may comprise a coupling arrangement configured to couple the cover body to the shaft.

Advantageously, the coupling arrangement helps to reduce relative movement between the cover body and the shaft, in use.

The coupling arrangement may comprise one or more protrusions, each configured to be received in a corresponding recess in the control member so as to couple the cover body to the shaft.

The heating system may comprise a controller configured to control electrical power supplied to the electrical heating device.

Advantageously, controlling the electrical heating device via a controller may, for example, enable the temperature of the external surface of the cover body to be controlled, and/or the energy efficiency of the heating system to be improved.

The controller may be configured to control electrical power supplied to the electrical heating device based on an input received from an input device assembly, for example, comprising one or more buttons and/or one or more switches.

Advantageously, controlling the electrical heating device via the input device assembly may enable a vehicle operator to, for example, vary the temperature of the external surface of the cover body, and/or to switch the heating system on and off, as desired.

The cover body may comprise the input device assembly.

The controller may be configured to vary an amount of electrical power supplied to the electrical heating device based on an input received from the input device assembly.

Advantageously, such a configuration of the controller may enable a vehicle operator to vary the temperature of the external surface of the cover body via the input device assembly, as desired.

The cover body may comprise the input device assembly. The controller may be configured to determine whether an operator's hand is grasping the cover body based on an input received from the input device assembly. The controller may be configured to cease supplying electrical power to the electrical heating device when the controller determines that no hand is grasping the cover body.

Advantageously, such a configuration of the controller may help to improve the energy efficiency of the heating system by ensuring that the external surface of the cover body is heated only when being grasped by an operator's hand, i.e. only when required.

The heating system may further comprise a sensor providing an input to the controller. The controller may be configured to determine a temperature of the external surface of the cover body based on the input received from the sensor.

Advantageously, the provision of the sensor may, for example, enable the controller to more accurately control a temperature of the external surface of the cover body, and/or to provide an indication to a vehicle operator as to the temperature of the external surface of the cover body.

The controller may be configured to control electrical power supplied to the electrical heating device based on the determined temperature of the external surface. The controller may be configured to control electrical power supplied to the electrical heating device based on the determined temperature of the external surface in order to heat the external surface to a set-point temperature.

Advantageously, such a configuration of the controller may enable the temperature of the external surface of the cover body to be accurately controlled and maintained.

The set-point temperature may be selectable via an input device, for example, including one or more buttons and/or one or more switches.

The cover assembly may further comprise an output device assembly in communication with the controller. The output device assembly may be configured to provide an indication of a status of the heating system. The status may include one or more of: whether electrical power is being supplied to the electrical heating device; an amount of electrical power being supplied to the electrical heating device; a temperature of the external surface of the cover body; and an amount of charge remaining in an energy storage device of the heating system.

Advantageously, the output device assembly may inform a vehicle operator as to a status of the heating system, and enable them to act to modify said status of the heating system if desired.

The output device assembly may comprise one or more light sources, such as one or more light-emitting diodes, for example, mounted to the cover body.

The cover body may comprise a first portion configured to be grippable by an operator's hand, and a second portion configured to support an operator's hand gripping the first portion. The second portion may extend substantially radially outward from the first portion.

Advantageously, such a configuration may enhance the comfort of an operator by supporting the side of their hand.

The controller may be housed in the second portion.

The controller may be configured to control electrical power supplied to the electrical heating device based on an input received from an input device assembly, for example, comprising one or more buttons and/or one or more switches. The second portion may comprise the input device assembly.

Advantageously, such a configuration may help to ensure that the input device assembly is spaced from an operator's hand gripping the first portion, and thus improve the comfort of the operator.

The second portion may comprise a skirt. The skirt may comprise the input device assembly. For example an input device may be mounted so it is operable on the exterior of the skirt.

According to a second aspect of the present teachings, there is provided a control member assembly comprising: a control member, such as a joystick, for controlling a vehicle, the control member comprising a shaft configured to be graspable by an operator's hand; and the cover assembly according to the first aspect encasing the shaft.

The at least two cover sections may be secured together around the shaft so as to encase the shaft.

The cover body may be a substantially snug fit to the shaft.

The control member may comprise a head portion extending from the shaft. The head portion may extend through the opening.

The head portion may comprise one or more input devices, such as one or buttons and/or one or more switches.

According to a third aspect of the present teachings, there is provided a control system for a vehicle comprising an operator station including one or more operator station members, such as a hand-operated control member, a seat, or an armrest. The control system comprises: an input device assembly, for example, comprising one or buttons and/or one or more switches; and one or more electrical heating systems, each configured to heat an external surface of an operator station member. The control system may be configured to control a heat output of the or each electrical heating system based on a control input received from the input device assembly.

Advantageously, the control system enables one or more operator station members to be heated so as to improve the comfort of an operator of a vehicle based on a single control input.

The heat output of at least one of the one or more heating systems may be remotely controlled via wireless communication based on the control input.

Advantageously, such a configuration of the control system enables one or more operator station members to be heated remotely so as to improve the comfort of an operator of a vehicle. As such, the control system may remove the need for complex wiring between the input device assembly and the at least one electrical heating system in the operator station. Moreover, the control system may enable an operator to control the heating of one or more operator control members before they have entered the operator station.

The control system may further comprise one or more operator station members. Each electrical heating system may be configured to heat an external surface of one of the operator station members.

At least one of the one or more operator station members may be configured so as to be retrofitta ble.

The control system may comprise a plurality of the heating systems. The control system may be configured to synchronously control the heat output of the heating systems based on the control input.

Advantageously, such a configuration enables multiple operator station members to be controlled via a single control input.

The control system may be configured to synchronously vary the heat output of the heating systems based on the control input.

Advantageously, such a configuration enables an operator to rapidly vary the heat output of multiple heating systems.

The control system may be configured to vary the heat output of the heating systems from a first heat output to a second heat output.

One of the heating systems may comprise the input device assembly. The input device assembly may be configured to be mounted to, or adjacent to, the corresponding operator station member.

Advantageously, such a configuration enables the heating of multiple operator station members to be controlled via a single input device assembly located on or adjacent one of the operator station members, which may be located proximate an operator's hand in use.

The input device assembly may comprise a wireless receiver configured to receive control inputs from an external device, such as a personal electronic device, e.g. a mobile phone or a tablet, and/or an external server.

Advantageously, such a configuration enables the heating of the one or more operator station members to be controlled based on an input sent from outside of the vehicle. As such, the control system may enable the one or more electrical heating systems to be remotely controlled so as to pre-heat the one or more operator station members before the operator enters the operator station.

The at least one of the one or more heating systems may be remotely controlled based on the control input via a short-range wireless protocol, such as Bluetooth^{RTM}, Wi-Fi^{RTM}, or Zigbee^{RTM}.

According to a fourth aspect of the present teachings, there is provided a vehicle comprising: the control system according to the third aspect; and an operator station comprising a plurality of operator station members, each having an external surface. Each heating system is configured to heat the external surface of one of said operator station members.

The vehicle may be a working machine, for example, wherein the working machine is for use in off-highway industries such as agriculture and construction.

According to a fifth aspect of the present teachings, there is provided a spinner knob for mounting to a steering wheel of a vehicle. The spinner knob comprises: a body having an external surface; and a heating system configured to heat the external surface of the body. The heating system comprises an electrical heating device, such as a heating element. The spinner knob is configured such that the body is rotatable relative to a steering wheel to which the spinner knob is mounted, in use.

Warming the hands of a vehicle operator is an efficient way of directly warming the operator since this will directly affect the operator's body temperature through vasodilation. As such, since it is likely that a vehicle operator will spend a significant proportion of their time operating a vehicle with a hand on the spinner knob to control a travel direction of the vehicle, heating the external surface of the body of the spinner knob will be beneficial for the thermal comfort of the operator. Moreover, if the vehicle is wholly electrically powered, heating the spinner knob to improve the thermal comfort of the operator is likely to be relatively more energy efficient compared to heating the air within the interior of the vehicle via conventional electric heaters. It may additionally be more efficient for vehicles which lack an enclosed cab, and therefore for which heating the air is impractical.

The heating system may comprise an energy storage device, such as a battery, arranged to supply electrical power to the electrical heating device.

Advantageously, providing the heating system with an energy storage device enables the spinner knob to be mounted to a steering wheel of a vehicle without requiring the spinner knob to be directly powered by the vehicle, for example, via wiring passing through the steering wheel. This simplifies implementation of the spinner knob, and enables the spinner knob to be easily retrofitted to vehicles.

The energy storage device may be housed within the body.

The energy storage device may be rechargeable.

Advantageously, providing a rechargeable energy storage device negates the need to replace the energy storage device each time the energy storage device is depleted.

The energy storage device comprises a rechargeable battery, for example, a lithium-ion battery, or a capacitor.

The spinner knob may further comprise a charging interface for charging the energy storage device via an external power source.

Advantageously, providing the spinner knob with a charging interface may simplify the process of charging the energy storage device.

The charging interface may include a charging port for receiving an electrical connector and/or an inductive charging device.

The spinner knob may further comprise a releasable mounting arrangement. The spinner knob may be configured to be releasably mounted to a steering wheel via the releasable mounting arrangement, in use.

Advantageously, the releasable mounting arrangement may enable the spinner knob to be rapidly unmounted from a steering wheel, for example to charge the heating system or to replace the spinner knob, and rapidly mounted to the steering wheel.

The releasable mounting arrangement may comprise a bayonet-type connector or a detent pin.

The heating system may comprise a controller configured to control electrical power supplied to the electrical heating device.

Advantageously, controlling the electrical heating device via a controller may, for example, enable the temperature of the external surface of the body to be controlled, and/or the energy efficiency of the heating system to be improved.

The controller may be configured to control electrical power supplied to the electrical heating device based on an input received from an input device assembly. The input device assembly may comprise one or more buttons and/or one or more switches.

Advantageously, controlling the electrical heating device via the input device assembly may enable a vehicle operator to, for example, vary the temperature of the external surface of the body, and/or to switch the heating system on and off, as desired.

The body may comprise the input device assembly.

The controller may be configured to vary an amount of electrical power supplied to the electrical heating device based on an input received from the input device assembly.

Advantageously, such a configuration of the controller may enable a vehicle operator to vary the temperature of the external surface of the body via the input device assembly, as desired.

The body may comprise the input device assembly. The controller may be configured to determine whether an operator's hand is grasping the body based on an input received from the input device assembly. The controller may be configured to cease supplying electrical power to the electrical heating device when the controller determines that no hand is grasping the body.

Advantageously, such a configuration of the controller may help to improve the energy efficiency of the heating system by ensuring that the external surface of the body is heated only when being grasped by an operator's hand, i.e. only when required.

The input device assembly may comprise an input device, such as a button or switch. The input device may be configured to change state depending on whether an operator's hand grasps the body

The heating system may further comprise a sensor providing an input to the controller. The controller may be configured to determine a temperature of the external surface of the body based on the input received from the sensor.

Advantageously, the provision of the sensor may, for example, enable the controller to more accurately control a temperature of the external surface of the body, and/or to provide an indication to a vehicle operator as to the temperature of the external surface of the body.

The controller may be configured to control electrical power supplied to the electrical heating device based on the determined temperature of the external surface.

The controller may be configured to control electrical power supplied to the electrical heating device based on the determined temperature of the external surface in order to heat the external surface to a set-point temperature.

Advantageously, such a configuration of the controller may enable the temperature of the external surface of the body to be accurately controlled and maintained.

The set-point temperature may be selectable via an input device. The input device may include one or more buttons and/or one or more switches.

The controller may be configured to supply electrical power to the electrical heating device for a predetermined period of time after which the controller may be configured to cease supplying electrical power to the electrical heating device.

Advantageously, such a configuration of the controller may help to improve the energy efficiency of the heating system by ensuring that electrical power is supplied to the electrical heating device intermittently during operation.

The spinner knob may further comprise an output device assembly in communication with the controller. The output device assembly may be configured to provide an indication of a status of the heating system. The status may include one or more of: whether electrical power is being supplied to the electrical heating device; an amount of electrical power being supplied to the electrical heating device; a temperature of the external surface of the body; and an amount of charge remaining in an energy storage device of the heating system.

Advantageously, the output device assembly may inform a vehicle operator as to a status of the heating system, and enable them to act to modify said status of the heating system if desired.

The output device assembly may comprise one or more light sources, such as one or more light-emitting diodes. The one or more light sources may be mounted to the body.

The heating system may be configured such that the electrical heating device receives electrical power from a power source external to the spinner knob.

According to a second aspect of the present teachings, there is provided a steering wheel for controlling a travelling direction of a vehicle. The steering wheel comprises the spinner knob according to the first aspect of the present teachings.

According to a third aspect of the present teachings, there is provided a vehicle comprising the steering wheel according to the second aspect of the present teachings.

The vehicle may comprise an electrical power source, such as a battery. The vehicle may be configured to supply electrical power to the heating system via said electrical power source.

The vehicle may comprise a charging interface for charging an energy storage device of the heating system via the electrical power source of the vehicle.

Advantageously, the charging interface enables the energy storage device to be charged by the vehicle's electrical power source, simplifying the process of charging the energy storage device.

The charging interface may include a charging port for receiving an electrical connector and/or an inductive charging device.

The vehicle may comprise a dashboard. The steering wheel may be mounted to the dashboard. The dashboard may comprise the charging interface.

Advantageously, such an arrangement of the steering wheel and the charging interface may further simplify the process of charging the energy storage device, since the spinner knob mounted to the steering wheel may be in close proximity to the charging interface on the dashboard.

The heating system may be configured such that the electrical heating device receives electrical power from the vehicle's electrical power source via a power cable.

The power cable may pass through the steering wheel.

The vehicle may be a working machine. The working machine may be for use in heavy industries such as agriculture and construction.

### BRIEF DESCRIPTION OF THE DRAWINGS

Embodiments are now disclosed by way of example only with reference to the drawings, in which:
Figure 1 is a side view of a vehicle of an embodiment of the present teachings;
Figure 2 is a schematic representation of an interior of an operator structure of the vehicle of Figure 1;
Figure 3 is a schematic representation of a spinner knob of an embodiment of the present teachings;
Figure 4 is a block diagram of a heating system of the spinner knob of Figure 3;
Figure 5 is a schematic representation of a spinner knob of an embodiment of the present teachings;
Figure 6 is an isometric view of a control member assembly of an embodiment of the present teachings in an assembled state;
Figure 7 is an isometric view of the control member assembly of Figure 6 is a disassembled stated;
Figure 8 is a base view of a cover assembly of the control member assembly of Figure 6; and
Figure 9 is a block diagram of a control system of an embodiment of the present teachings.

### DETAILED DESCRIPTION OF EMBODIMENT(S)

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

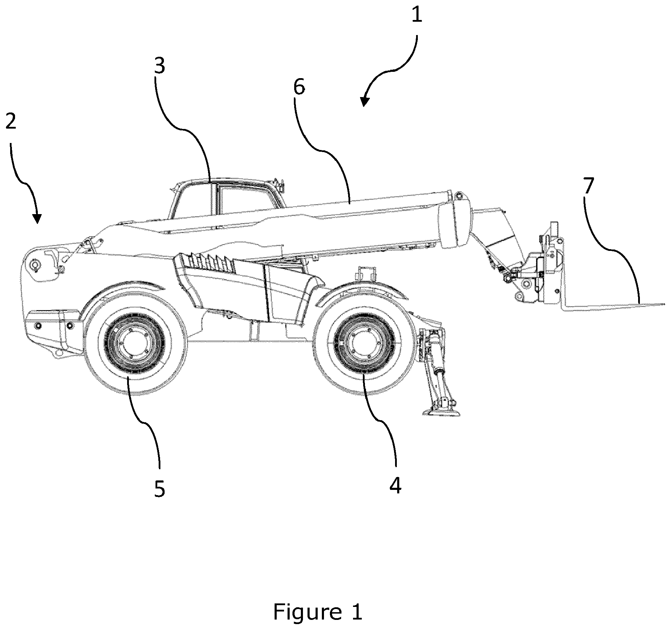

Referring firstly to Figure 1, an embodiment includes a vehicle 1. In this embodiment, the vehicle 1 is a working machine, and in particular a telescopic handler. In alternative embodiments, the vehicle 1 may be any suitable ground, marine or aerial vehicle. For example, in alternative embodiments, the vehicle 1 may be any suitable working machine such as a forklift truck, a backhoe loader, a wheeled loading shovel, a dumper, an excavator or a tractor. Such working machines are suitable for use in heavy industries such as agriculture and construction.

The vehicle 1 includes a vehicle body 2. The vehicle body 2 includes an operator structure 3 to accommodate a vehicle operator. In this embodiment, the operator structure 3 is an enclosed operator structure from which an operator can operate the vehicle 1. In other embodiments, the vehicle 1 may have an open canopy structure (not shown) for the operator.

The vehicle 1 has a ground engaging propulsion structure 4, 5 comprising a first axle and a second axle, each axle being coupled to a pair of wheels (two wheels 4, 5 are shown in Figure 1 with one wheel 4 connected to the first axle and one wheel 5 connected to the second axle). The first axle may be a front axle and the second axle may be a rear axle. One or both of the axles may be coupled to an electric motor or engine which is configured to drive movement of one or both pairs of wheels 4, 5. Thus, the wheels 4, 5 may contact a ground surface and rotation of the wheels 4, 5 may cause movement of the working vehicle 1 with respect to the ground surface.

Being a working machine, the vehicle 1 also comprises a working arm 6, with a working implement 7 (pallet forks in this embodiment, but in other embodiments a shovel, grab or the like are also known).

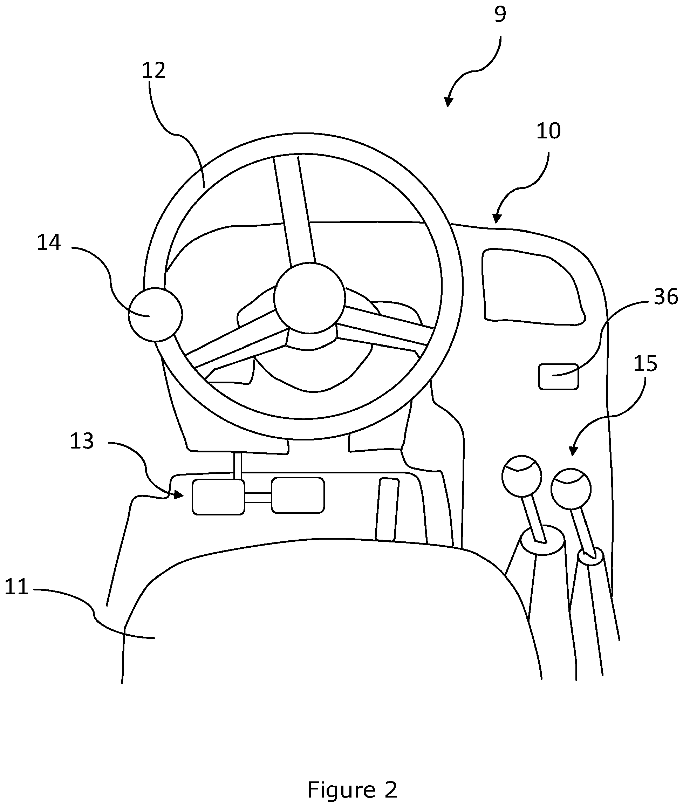

Figure 2 shows a schematic representation of the interior of the operator structure 3. The operator structure 3 houses an operator station 9 including a dashboard 10, a seat 11, foot-operated control members 13 (e.g. pedals), and hand-operated control members 15 (e.g. gear sticks and/or joysticks to control the working arm 6 and attitude of the implement 7 etc.).

A steering wheel 12 for controlling a travelling direction of the vehicle 1 is mounted to the dashboard 10. The vehicle 1 is configured such that rotation of the steering wheel 12 causes rotation of the wheels 4 or the wheels 5, such that the travelling direction of the vehicle 1 can be controlled when the vehicle 1 is moving with respect to an underlying ground surface.

A spinner knob 14 (also known as a brodie knob) is mounted to the steering wheel 12. The spinner knob 14 enables the vehicle 1 to be steered simply and rapidly via a single hand of the vehicle's operator, leaving the operator's other hand free to operate the control members 15 simultaneously whilst steering.

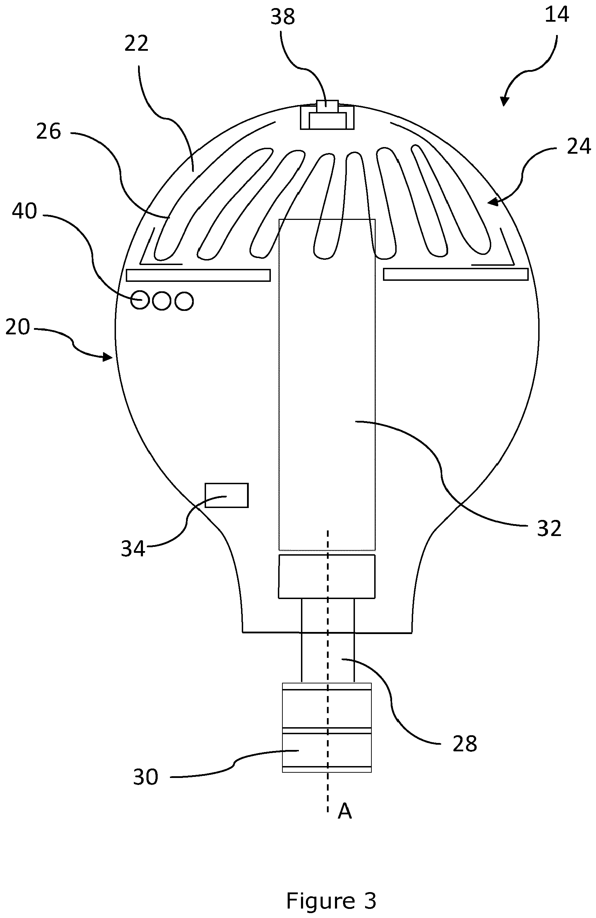

With reference to Figure 3, the spinner knob 14 includes a body 20 having an external surface 22. In this embodiment, the body 20 has a balloon or bulb-shaped profile, which helps the vehicle operator to comfortably grip the body 20. In alternative embodiments (not shown), the body 20 may have any suitable shape.

The spinner knob 14 is configured such that the body 20 is rotatable relative to the steering wheel 12 to which the spinner knob 14 is mounted, in use. To achieve this, the spinner knob 14 includes a shaft 28 connected to the body 20 such that the body 20 is free to rotate relative to the shaft 28 about a longitudinal axis A of the spinner knob 14, for example via a roller bearing arranged between the shaft 28 and the body 20. Otherwise, the shaft 28 and the body 20 are prevented from moving relative to each other. The shaft 28 is mounted to the steering wheel 12 such that relative movement between the shaft 28 and the steering wheel 12 is prevented.

In use, the vehicle operator uses one of their hands to grasp the external surface 22 of the spinner knob 14 and move the spinner knob 14 along a circular path in order to rotate the steering wheel 12. Since the body 20 is rotatable relative to the steering wheel 12, the operator can maintain a comfortable grip on the body 20 whilst rotating the steering wheel 12 rapidly and simply via the spinner knob 14.

Although the spinner knob 14 may be implemented in any vehicle having a steering wheel, the spinner knob 14 is particularly beneficial when implemented in a working machine, since operators of such machines typically need to control the working implement 7 (via the working arm 6) of the machine with one hand, for example via the hand-operated control members 15, leaving just one hand to control the steering wheel 12. This is desirable during a loading or material re-handling operation.

The spinner knob 14 includes a heating system 24 configured to heat the external surface 22 of the body 20.

Warming the hands of the vehicle operator is an efficient way of directly warming the operator since this will directly affect the operator's body temperature through vasodilation. Therefore, since it is likely that a vehicle operator will spend a significant proportion of their time operating the vehicle 1 with a hand on the spinner knob 14 to control a travel direction of the vehicle 1, heating the external surface 22 of the body 20 of the spinner knob 14 via the heating system 24 will be beneficial for the thermal comfort of the operator. Moreover, it will be appreciated that less electrical energy will be required to heat the external surface 22 of the spinner knob 14 compared to the electrical energy required to heat the steering wheel 12 or the air within the operator structure 3. As such, the spinner knob 14 provides an energy efficient solution to improving the thermal comfort of the vehicle operator.

The heating system 24 includes an electrical heating device 26. In this embodiment, the electrical heating device 26 includes a heating element in the form of a thick film element that emanates heat when an electrical current passes through it. In alternative embodiments (not shown), the electrical heating device 26 may include any suitable heating element, for example formed of a metallic resistance wire, or formed from non-metal materials such as ceramics and polymers. The electrical heating device 26 may include one or more heating elements.

Additionally or alternatively, the electrical heating device 26 may include any suitable device capable of converting electrical energy into heat energy, such as a Peltier device for example.

In the illustrated embodiment, the body 20 is in the form of a shell having an internal surface adjacent the external surface 22. The electrical heating device 26 is mounted to the internal surface of the body 20. The body 20 is formed from a material having a suitable thermal conductivity to enable the electrical heating device 26 to heat the external surface 22, e.g. a plastics material such as ABS.

In alternative embodiments (not shown), the electrical heating device 26 may be mounted on the external surface 22, or encased within the body 20 underneath the external surface 22.

In the illustrated embodiment, the electrical heating device 26 is arranged only adjacent a portion of the external surface 22 at an end of the body 20 opposite to the shaft 30. Such a portion of the external surface 22 is likely to receive a palm of the vehicle operator's hand in use, and thereby provides a large contact surface area for heating the operator's hand.

In alternative embodiments (not shown), the electrical heating device 26 may be arranged adjacent a majority or substantially all of the external surface 22 of the body 20.

The heating system 24 includes an energy storage device 32 arranged to supply electrical power to the electrical heating device 26. In this embodiment, the energy storage device 32 is housed within the body 20. In alternative embodiments, the energy storage device 32 may be located elsewhere, such as within the shaft 28 or outside of the body 20 (e.g. in the steering wheel 12).

In this embodiment, the energy storage device 32 is rechargeable. For example, the energy storage device 32 may include one or more rechargeable batteries, such as lithium-ion batteries, and/or one or more capacitors.

In alternative embodiments (not shown), the energy storage device 32 may not be rechargeable. For example, the energy storage device 32 may include one or more non-rechargeable batteries.

The spinner knob 14 includes a charging interface 34 for charging the energy storage device 32 via an external power source. The charging interface 34 may include any suitable interface, such as a charging port for receiving an electrical connector (e.g. a USB port), for example secured to a power cable, and/or an inductive charging device for charging the energy storage device 32 wirelessly via inductive coupling.

The vehicle 1 includes an electrical power source (not shown), such as one or more batteries (e.g. a low voltage battery used for vehicle ancillary functions such as lighting, windscreen wipers etc). The vehicle 1 is configured to supply electrical power to the heating system 24 from the power source via a suitable charging interface 36 (Fig 2).

The charging interface 36 of the vehicle 1 may include any suitable interface, such as a charging port for receiving an electrical connector, for example secured to a power cable, and/or an inductive charging device for charging the energy storage device 32 wirelessly via inductive coupling. In this embodiment, the dashboard 10 includes the charging interface 36.

With reference to Figure 3, the spinner knob 14 includes a releasable mounting arrangement 30. The spinner knob 14 is configured to be releasably mounted to the steering wheel 12 via the releasable mounting arrangement 30. By 'releasably mounted', it is intended to mean that the spinner knob 14 can be mounted and demounted from the steering wheel 12 without the use of tools (e.g. spanners, Allen keys, screw drivers and the like). The releasable mounting arrangement 30 may include any suitable arrangement, such as a male or female portion of a bayonet-type connector, or a detent pin configured to be releasably secured to a correspondingly shaped formation in the steering wheel 12.

In this embodiment, the releasable mounting arrangement 30 is fixedly secured to an end of the shaft 28, such that the shaft 28 is fixed relative to the steering wheel 12 when the releasable mounting arrangement 30 is mounted to the steering wheel 12.

An exemplary method of charging the energy storage device 32 of the spinner knob 14 will now be described.

In a first step, the spinner knob 14 is demounted from the steering wheel 12 via the releasable mounting arrangement 30.

In a subsequent step, the charging interface 34 of the spinner knob 14 is electrically coupled to the charging interface 36 of the vehicle 1 such that the energy storage device 32 is charged via the electrical power source of the vehicle 1. For example, in embodiments in which the charging interfaces 34, 36 both include charging ports, the charging interfaces 34, 36 may be electrically coupled via a power cable electrically connected to both charging ports. Further, in embodiments in which the charging interfaces 34, 36 both include inductive charging devices, the charging interfaces 34, 36 may be electrically coupled by positioning the inductive charging devices to be in sufficiently close proximity to each other, such that the energy storage device 32 can be charged wirelessly via inductive coupling between the two inductive charging devices.

Advantageously, such a charging method enables the energy storage device 32 of the spinner knob 14 to be charged from the electrical power source of the vehicle 1 without requiring cabling passing through the steering wheel 12, which may be complex, expensive, and difficult to retrofit to existing vehicles.

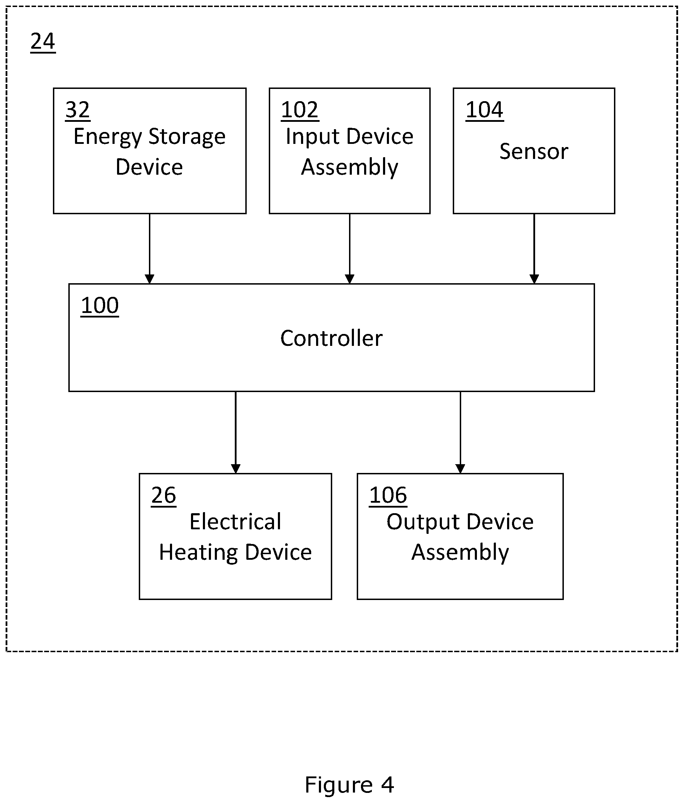

Figure 4 shows a block diagram of the heating system 24. In the illustrated embodiment, the heating system 24 includes a controller 100 configured to control electrical power supplied to the electrical heating device 26. The controller 100 may be any suitable device and may include a microcontroller or a microprocessor for example. The controller 32 receives electrical power from the energy storage device 32.

In this embodiment, the heating system 24 includes an input device assembly 102 configured to provide an input to the controller 100. For example, the input device assembly 102 may include one or more buttons and/or one or more switches. Additionally or alternatively, the input device assembly 102 may include a touch sensitive input device such as a tactile sensor, and/or a wireless receiver configured to receive inputs via a suitable short range wireless protocol such as Bluetooth^{RTM}, Wi-Fi^{RTM}, or Zigbee^{RTM} for example. A wireless receiver may be used so that a controller of the vehicle (not shown) can remotely control operation of the spinner knob 14, e.g. to pre-heat the spinner knob in advance of pre-programmed vehicle start time, or based on the proximity of a vehicle operator. In exemplary embodiments, operation of the spinner knob 14 may be remotely controlled via a wireless receiver of the input device assembly 102 using a personal electronic device such as a mobile phone, and/or a remote server. In the present embodiment, the body 20 includes the input device assembly 102.

The controller 100 is configured to control electrical power supplied to the electrical heating device 26 based on an input received from the input device assembly 102. For example, the controller 100 may be configured to vary an amount of electrical power supplied to the electrical heating device 26 based on an input received from the input device assembly 102. As such, a machine operator is able to vary the temperature of the external surface 22 of the body via the input device assembly 102. Furthermore, the heating system 24 may be turned on and off via the input device assembly 102.

The controller 100 is configured to determine whether an operator's hand is grasping the body 20 based on an input received from the input device assembly 102. In the illustrated embodiment, the input device assembly 102 includes an input device 38 on the body 20, as shown in Figure 3. The input device 38 is configured to change state depending on whether an operator's hand grasps the body 20. In this embodiment, the input device 38 is a button or switch located on an opposite end of the body 20 to the shaft 28. The button or switch is located within a recess in the body 20 such that the button or switch is proud of the external surface 22. As such, a hand grasping the external surface 22 will cause the button or switch to be depressed, and thus change state.

In alternative embodiments (not shown), the input device assembly 102 may include any suitable input device configured to change state depending on whether an operator's hand grasps the body 20. For example, the input device assembly 102 may include a strain gauge adjacent the external surface 22. Alternatively, the input device assembly may include a sensor configured to sense relative rotation between the body 20 and the shaft 28, and the controller 100 may be configured to determine that an operator's hand is grasping the body 20 when the body 20 rotates relative to the shaft 28.

The controller 100 is configured to cease supplying electrical power to the electrical heating device 26 when the controller 100 determines that no hand is grasping the body 20. As such, the controller 100 helps to improve the energy efficiency of the heating system 24 by ensuring that the external surface 22 of the body 20 is heated only when being grasped by an operator's hand, i.e. only when required.

Additionally or alternatively, the controller 100 may be configured to supply electrical power to the electrical heating device 26 for a first predetermined period of time after which the controller 100 may be configured to cease supplying electrical power to the electrical heating device 26. In such embodiments, the controller 100 may be further configured to subsequently re-supply electrical power to the electrical heating device 26 after a second predetermined period of time has lapsed, the second predetermined period of time starting from the end of the first predetermined period of time. The first and second predetermined periods of time may be the same or different. As such, the controller 100 helps to improve the energy efficiency of the heating system 24 by ensuring that electrical power is supplied to the electrical heating device 26 intermittently during operation.

In the illustrated embodiment, the heating system 24 includes a sensor 104 providing an input to the controller 100. The controller 100 is configured to determine a temperature of the external surface 22 of the body 20 based on the input received from the sensor 104. The sensor 104 may be any suitable sensor such as a thermocouple, for example. The sensor 104 may be located on or adjacent to the external surface 22.

The controller 100 is configured to control electrical power supplied to the electrical heating device 26 based on the determined temperature of the external surface 22 of the body 20.

In exemplary embodiments, the controller 100 is configured to control electrical power supplied to the electrical heating device 26 based on the determined temperature of the external surface 22 of the body 20 in order to heat the external surface 22 to a set-point temperature. As such, the temperature of the external surface 22 can be accurately controlled and maintained. In such embodiments, the set-point temperature may be selectable via the input device assembly 102. For example, one of a plurality of discrete set-point temperatures may be selected via the input device assembly 102. This enables the machine operator to change the temperature of the external surface 22 as desired.

In the illustrated embodiment, the heating system 24 includes an output device assembly 106 in communication with the controller 100. The output device assembly 106 is configured to provide an indication of a status of the heating system 24. For example, the status may include one or more of: whether electrical power is being supplied to the electrical heating device 26; an amount of electrical power being supplied to the electrical heating device 26; a temperature of the external surface 22 of the body 20 (e.g. an indication of a set-point temperature); and an amount of charge remaining in the energy storage device 32.

The output device assembly 106 may include one or more light sources 40, such as one or more light-emitting diodes (LEDs), for example, mounted to the body 20. In the illustrated embodiment, the output device assembly 106 incudes a plurality of light sources 40 mounted to the body 20 as shown in Figure 3. The output device assembly 106 may be configured to provide an indication of a status of the heating system 24 based on a change in colour of the light emitted by each light source 40, a predetermined blinking pattern of each light source, and/or the number of light sources 40 that emit light relative to the number of light sources 40 that do not emit light.

Additionally or alternatively, the output device assembly 106 may include any suitable output device such as a sound emitting device (e.g. a speaker), and/or a vibration device, configured to provide an indication of a status of the heating system 24.

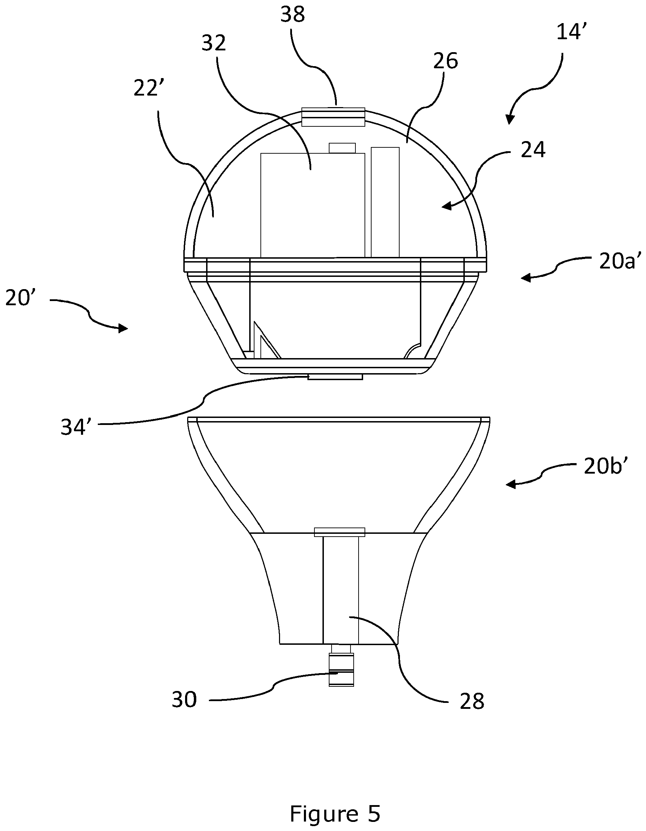

With reference to Figure 5, an alternative embodiment of a spinner knob 14' for mounting to the steering wheel 12 of the vehicle 1 will now be described. Features in common with the spinner knob 14 of Figure 3 are denoted with common reference numerals and their description shall not be repeated for brevity.

The spinner knob 14' includes a body 20' formed from a first part 20a' and a second part 20b'. The first part 20a' is releasably secured to the second part 20b' via a suitable releasable securing arrangement, such as a corresponding screw threads on the first and second parts 20a', 20b', or a snap-fit arrangement, for example.

The first part 20a' includes the heating system 24, which is configured to heat an external surface 22' of the first part 20a'. The second part 20b' is connected to the shaft 28 such that the body 20' is free to rotate relative to the shaft 28 in the same manner as the spinner knob 14 of Figure 3.

The first part 20a' includes a charging interface 34', which may be the same as the charging interface 34 of the spinner knob 14 of Figure 3. In the illustrated embodiment, the charging interface 34' is located on a surface of the first part 20a' facing the second part 20b' when the first and second parts 20a', 20b' are releasably secured to each other. In alternative embodiments (not shown), the charging interface 34' may be located in any suitable position on the first part 20a'.

To charge the energy storage device 32 of the spinner knob 14', the first part 20a' is separated from the second part 20b' via the releasable securing arrangement. The second part 20b' may remain mounted to the steering wheel 12. Once the first part 20a' is removed from the second part 20b', the energy storage device 32 may be charged via the charging interface 34' in the same manner as the spinner knob 14 of Figure 3.

Advantageously, providing the body 20' as two separate parts 20a', 20b' simplifies the process of charging the energy storage device 32, since only the first part 20a' of the body 20' is required to be removed from the steering wheel 12 in order to charge the energy storage device 32.

In the foregoing description, the electrical heating device 26 receives electrical power from the energy storage device 32 located onboard the spinner knob 14. In alternative embodiments (not shown), the electrical heating device 26 may receive electrical power directly from the electrical power source of the vehicle 1 whilst the spinner knob 14 is mounted to the steering wheel 12. For example, the vehicle's electrical power source may be electrically connected to the electrical heating device 26 via an electrical connector assembly passing through the steering wheel 12. Such an electrical connector assembly may include one or more slip rings and/or one or more clock springs to enable the electrical connection between the vehicle's electrical power source and the electrical heating device 26 to be maintained whilst the spinner knob 14 rotates relative to the steering wheel 12, and the steering wheel 12 rotates relative to the dashboard 10.

In the foregoing description, the spinner knob 14 includes the controller 100, the input device assembly 102, and the output device assembly 106. In alternative embodiments (not shown), one or more of the controller 100, the input device assembly 102, and the output device assembly 106 may be partially or wholly located in the vehicle 1 away from the spinner knob 14. For example, the dashboard 10 of the vehicle 1 may include the controller 100, at least part of the input device assembly 102, and/or at least part of the output device assembly 106. In such embodiments, the controller 100, the input device assembly 102, and/or the output device assembly 106 may be in communication with the relevant components of the spinner knob 14 via suitable cabling, for example passing through the steering wheel 12.

In alternative embodiments the spinner knob may be configured such that the rotation of the knob in use may contribute to the charging of the electrical storage device. In other embodiments the spinner knob may be inductively charged from induction coils located on the steering wheel.

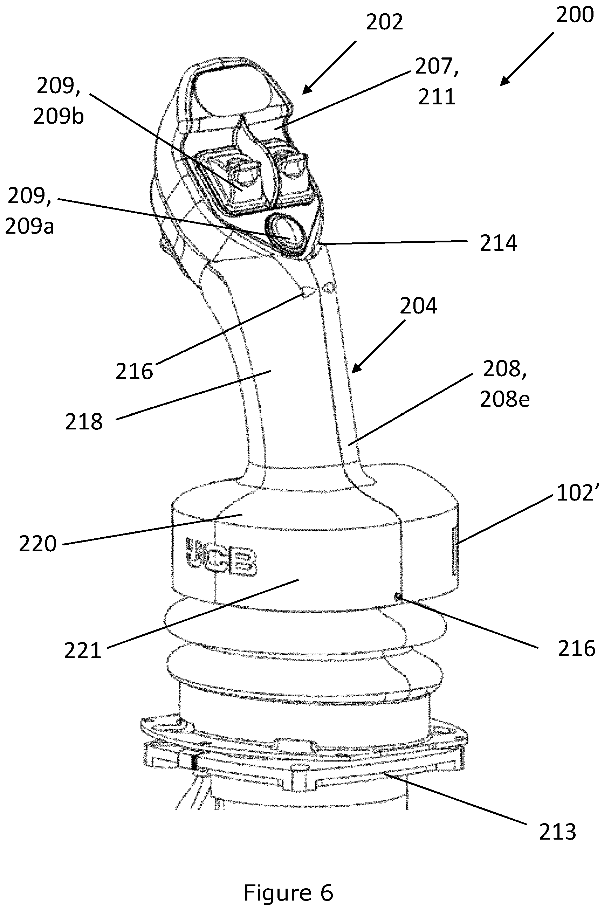

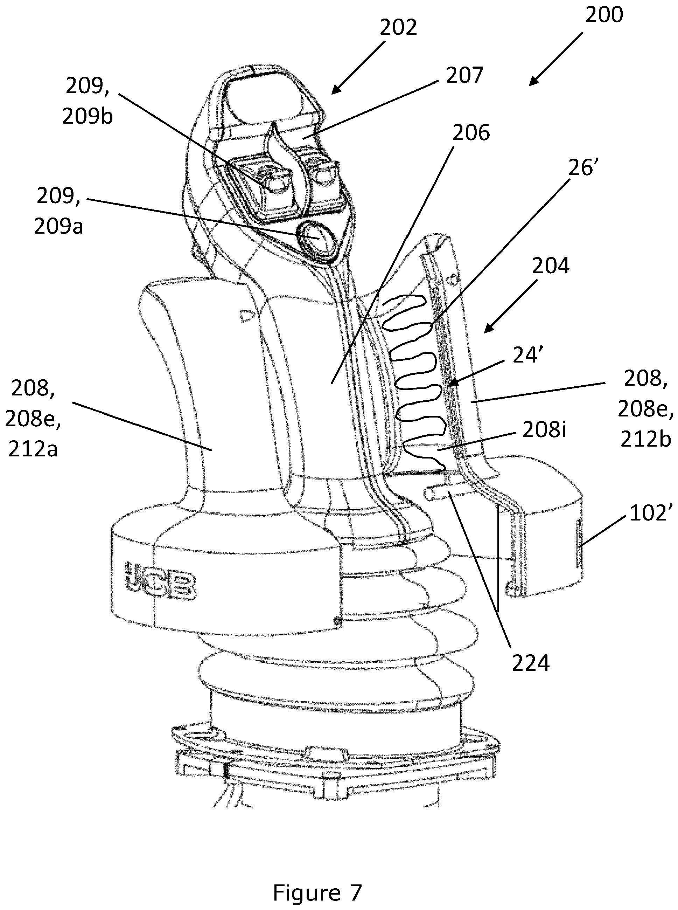

Figures 6 and 7 show a control member assembly 200 according to an embodiment. The control member assembly 200 includes a control member 202 for controlling the vehicle 1, and a cover assembly 204.

The control member 202 includes a shaft 206 configured to be graspable by an operator's hand. The control member 202 may be one of the hand-operated control members 15 of the operator station 9 of the vehicle 1 (e.g. for controlling movement of the vehicle 1, the working arm 6 and/or the implement 7). In the illustrated embodiment, the control member 202 is a joystick. In alternative embodiments (not shown), the control member 202 may be any suitable control member, such as a gearstick, a handbrake, or an indicator stalk, for example.

The control member 202 includes a head 207 extending from the shaft 206. The head 207 includes a plurality of input devices 209 including a button 209a and two switches 209b. The input devices 209 are arranged such that the thumb of an operator's hand grasping the shaft 206 can actuate the input devices 209. In alternative embodiments (not shown), the head 207 may include one or more input devices 209 such as one or buttons 209a and/or one or more switches 209b. The switches 209b may be used to e.g. control auxiliary hydraulic functions, vehicle forward and reverse motion, or telescoping of the working arm, for example. The button 209a may control a valve that disconnects the vehicle 1 transmission, for example. Alternatively, the head portion 207 may include any suitable input device 209 or no input devices 209.

The shaft 206 is movable relative to a base 213 of the control member 202. The base 213 is configured to be mounted within the operator station 9 of the vehicle 1. In use, an operator moves (e.g. pivots) the shaft 206 relative to the base 213 to control the vehicle 1. For example, the joystick may be tilted in one plane to lift or lower the working arm, and in another plane to a adjust the attitude of the implement 7 with respect to the working arm 6.

The cover assembly 204 includes a cover body 208 configured to encase the shaft 206. The cover body 208 includes an external surface 208e. The cover assembly 204 includes an electrical heating system 24' configured to heat the external surface 208e. As such, the thermal comfort of an operator grasping the external surface 208e may be improved. The electrical heating system 24' includes an electrical heating device 26'.

Unless stated otherwise in the following, the electrical heating system 24' and the electrical heating device 26' share the same or similar features as the electrical heating system 24 and the electrical heating device 26 previously discussed.

As shown in Figure 7, the cover body 208 is formed from two cover sections 212a, 212b configured to be secured together around the shaft 206 so as to encase the shaft 206.

Advantageously, by forming the cover body 208 from a plurality of cover sections 212a, 212b configured to be secured together around the shaft 206 so as to encase the shaft 206, the cover body 208 can be more easily retrofitted to the control member 202.

In alternative embodiments (not shown), the cover body 208 may be formed from more than two cover sections (e.g. three or more cover sections) configured to be secured together around the shaft 206 so as to encase the shaft 206.

Alternatively, the cover body 208 may be formed from a single cover section. For example, in such embodiments, the cover body 208 may be formed from a suitable flexible material allowing the cover body 208 to be pulled over the head 207 until it encases the shaft 206.

The electrical heating device 26' is configured to heat the external surface 208e of each cover section 212a, 212b. In the illustrated embodiment, the electrical heating device 26' includes first and second heating elements configured to heat the external surfaces 208e of the first and second cover sections 212a, 212b respectively (only the heating element configured to heat the external surface 208e of the second cover section 212b is visible in Figure 7. In alternative embodiments (not shown), the electrical heating device 26' may be configured to only heat the external surface 208e of a subset of the cover sections 212a, 212b.

In the illustrated embodiment, the cover body 208 is in the form of a shell having an internal surface 208i adjacent the external surface 208e. The electrical heating device 26' is mounted to the internal surface 208i of the cover body 208. The cover body 208 is formed from a material having a suitable thermal conductivity to enable the electrical heating device 26' to heat the external surface 208e, e.g. a plastics material such as acrylonitrile butadiene styrene (ABS).

In alternative embodiments (not shown), the electrical heating device 26' may be mounted on the external surface 208e, or encased within the cover body 208 underneath the external surface 208e.

The cover body 208 is substantially rigid. By "substantially rigid" it is intended to mean that the cover body 208 is self-supporting when separated from the control member 202. In the illustrated embodiment, the cover body 208 is formed from a substantially rigid material, such as a substantially rigid polymeric material (e.g. acrylonitrile butadiene styrene (ABS)). In alternative embodiments (not shown), the cover body 208 may be formed from any suitable substantially rigid material (e.g. a resin and fibre composite material). In alternative embodiments (not shown), the cover body 208, may not be substantially rigid, or may have rigid portions and other portions that are resilient, e.g. an upper edge of the body may be flexible so as to conform to the shaft. In addition or alternatively an outer surface may have a resilient layer or coating in whole or part to enhance the comfort of the of the external surface 208e.

The cover body 208 may be formed via a moulding process, such as an injection moulding process. This enables the cover body 208 to be produced rapidly and relatively inexpensively. Alternatively, the cover body 208 may be produced via any suitable manufacturing process.

The cover body 208 includes an opening 214 formed when the cover sections 212a, 212b are secured together. As shown in Figure 6, a head portion 211 of the control member 202 (i.e. a portion of the control member 202 including the head 207 but which may include part of the shaft 206) extends through the opening 214. As such, the head 207 is not covered by the cover body 208, enabling an operator to access the input devices 209 without impediment. In alternative embodiments (not shown), the cover body 208 may be configured to cover part or all of the head 207.

The cover sections 212a, 212b are secured together at a plurality of discrete connection points 216. In the illustrated embodiment, the cover sections 212a, 212b are secured together at four connection points 216, two connection points 216 on one side of the shaft 206 (shown in Figure 6), and by two further connection points 216 on an opposite side of the shaft 206 (not shown in the Figures). Alternatively, the cover sections may be secured together by two, three or more than four connection points 216.

In alternative embodiments (not shown), the cover sections 212a, 212b may be secured together at one or more continuous connection areas (e.g. the cover sections 212a, 212b may be bonded or welded together).

The cover sections 212a, 212b are releasably secured together. This helps to simplify assembly and disassembly of the cover assembly 204. By "releasably secured", it is intended to mean that once secured together, the cover sections 212a, 212b can disassembled from each other by hand or using common hand tools without damaging the cover sections 212a, 212b.

In the illustrated embodiment, the cover sections 212a, 212b are releasably secured together via mechanical fasteners (e.g. screws, bolts, or rivets). At each connection point 216, one mechanical fastener (not shown) passes through each cover section 212a, 212b to secure the cover sections 212a, 212b together.

In alternative embodiments (not shown), the cover sections 212a, 212b may be releasably secured together via any suitable means (e.g. via an interference fit, or via one or more clips that are e.g. a snap-fit or push-fit).

The heating system 24' includes an input device assembly 102', which may have the same or similar features to the input device assembly 102 previously discussed. In the illustrated embodiment, the input device assembly 102' includes a switch having a plurality of positions corresponding to the amount of electrical power supplied to the heating device 26'. In the illustrated embodiment, the switch has positions corresponding to "off", "low heat" and "high heat" positions. In alternative embodiments, the switch may have fewer or more positions.

The cover body 208 includes a first portion 218 configured to be grippable by an operator's hand, and a second portion 220 configured to support an operator's hand gripping the first portion 218. The second portion 220 extends substantially radially outward from the first portion 218. In the illustrated embodiment, the second portion 220 forms a base of the cover body 208, the first portion 218 extending axially from the second portion 220. The second portion 220 extends substantially radially outward from the first portion 218 along an entire circumference of the first portion. In alternative embodiments (not shown), the second portion 220 may extend substantially radially outward from only a portion of the circumference of the first portion 218.

In the illustrated embodiment, the second portion 220 includes the input device assembly 102'. In particular, the second portion 220 includes a skirt 221, which includes the input device assembly 102'.

In alternative embodiments (not shown), the first portion 218 may include the input device assembly 102', or the first and second portions 218, 220 may each include one or more input devices of the input device assembly 102'.

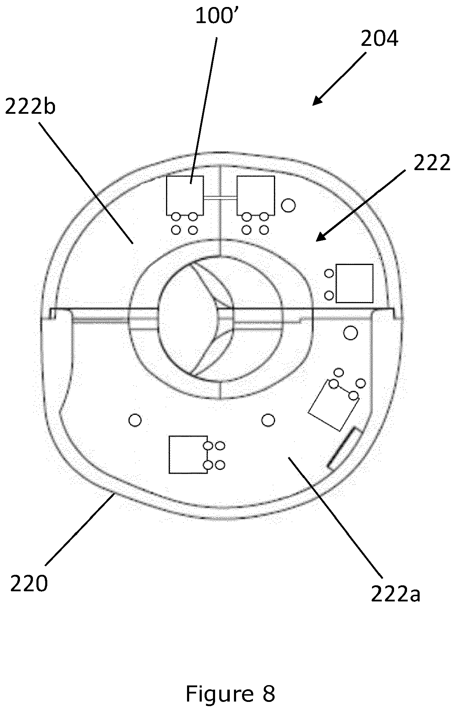

With further reference to Figure 8, the heating system 24' includes a controller 100' housed in the second portion 220. The controller 100' shares the same or similar features to the controller 100 previously discussed. In the illustrated embodiment, a printed circuit board (PCB) 222 housed within the second portion 220, includes the controller 100'. The PCB 222 is formed from two PCB sections 222a, 222b, each PCB section being mounted to one of the cover sections 212a', 212b'. The PCB sections 222a, 222b are electrically connectable when the cover sections 212a, 212b' are secured together as previously discussed. The PCB sections 222a, 222b may be electrically connected via a cable or via any other suitable means.

Advantageously, housing the PCB 222 in the second portion 220 of the cover body 208 may help to protect the PCB 222 from damage, e.g. due to water or dust ingress.

In the illustrated embodiment, the heating system 24' is configured to receive electrical power from the electrical power source of the vehicle 1, e.g. via a cable such as a USB cable connected to a suitable socket in the vehicle 1. Alternatively or additionally, the heating system 24' may include the energy storage device 32 previously discussed.

In some embodiments, the input device assembly 102' may include the input device 38 previously discussed, e.g. located on the first portion 218 of the cover body 208.

In some embodiments, the heating system 24' may include the sensor 104 previously discussed, e.g. located on the cover body 208.

In some embodiments, the heating system 24' may include the output device assembly 106 previously discussed, e.g. located on the second portion 220 of the cover body 208.

With reference to Figure 7, the cover body 208 incudes a coupling arrangement 224 configured to couple the cover body 208 to the shaft 206. In the illustrated embodiment, the coupling arrangement 224 includes a plurality of protrusions 224 (four in the illustrated embodiment, two on each cover section 212a, 212b, only one of which is shown in Figure 7) projecting radially inwards from the internal surface 208i of the cover body 208. Each protrusion 224 is arranged to be received in a corresponding recess (not shown) in the control member 202 so as to couple the cover body 208 to the shaft 206. In the illustrated embodiment, the protrusions 224 are located in the second portion 220 of the cover body 208, but may additionally or alternatively be located in the first portion 218.

During assembly, the protrusions 224 are inserted into the corresponding recesses (not shown) in the control member 202 as the cover sections 212a, 212b are brought together around the shaft 206, and prior to the cover sections 212a, 212b being secured together.

In alternative embodiments (not shown), the coupling arrangement 224 may include one, two, three or more than four protrusions 224, and each cover section 212a, 212b may include zero, one, or more than two protrusions 224. Alternatively, the cover body 208 may include any suitable coupling arrangement 224.

For example, the cover body 208 may be a substantially snug fit to the shaft 206, i.e. the shapes of the internal surface 208 of the cover body 208 and the external surface of the shaft 206 encased by the cover body 208 may substantially match each other, at least at the top where the cover body 208 meets the shaft 206. Advantageously, the substantially snug fit helps provide a rigid coupling between the cover body 208 and the shaft 206, especially when the shaft 206 has a non-uniform profile along its length. In the illustrated embodiment, the first portion 218 of the cover body 218 is a substantially snug fit to the shaft 206.

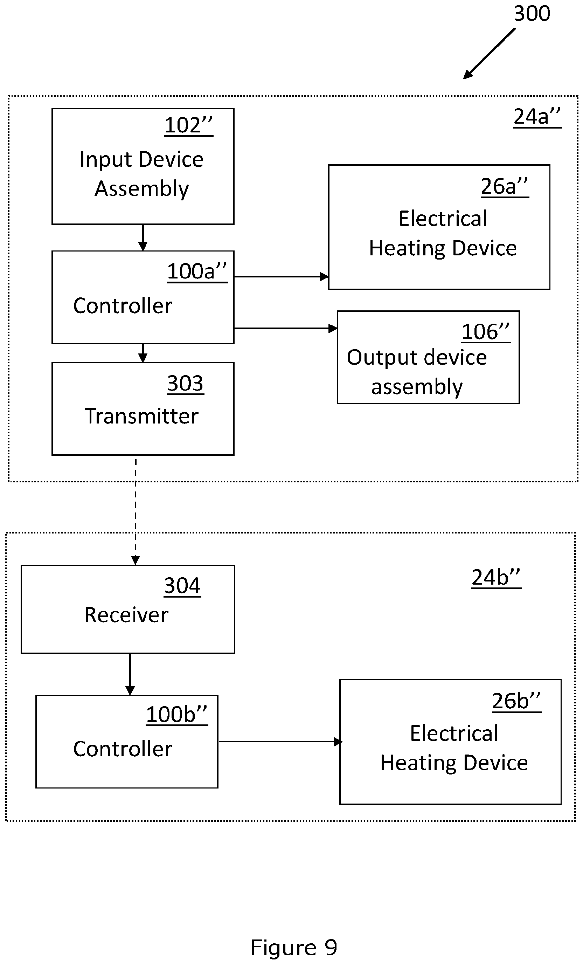

Figure 9 shows a block diagram of a control system 300 for the vehicle 1, according to an embodiment. The control system 300 includes an input device assembly 102", and first and second electrical heating systems 24a", 24b". Each electrical heating system 24a", 24b" is configured to heat an external surface of an operator station member of the operator station 9. By "operator station member" it is intended to mean a member in the operator station 9 that is contactable by an operator of the vehicle 1, such as any hand-operated control member (e.g. the joystick 202, the spinner knob 14, the steering wheel 12, or a gearstick 15), the seat 11, an armrest (not shown), or a cover assembly, such as the cover assembly 204, arranged to cover another operator station member, for example.

The input device assembly 102" may correspond to one of the input device assemblies 102, 102' previously discussed. As such, the input device assembly 102" may include one or more operator-actuated input devices, such as one or more buttons, one or more switches, and/or a touch sensitive input device. Additionally or alternatively, the input device assembly 102" may include a wireless receiver configured to receive control inputs from an external device, such as a personal electronic device, e.g. a mobile phone or a tablet, and/or an external server. For example, the input device assembly 102" may be configured to receive a SIM card to enable the input device assembly 102" to receive control inputs from a mobile phone, remote server or the like via the wireless receiver via a suitable cellular wireless protocol such as GPRS, 3G, 4G, and/or 5G. In other embodiments the input device assembly may be configured to receive control inputs via a suitable short-range wireless protocol, such as Bluetooth^{RTM}, Wi-Fi^{RTM}, or Zigbee^{RTM} from a controller of the vehicle 1 or a personal electronic device etc.

The control system 300 is configured to control a heat output of each electrical heating system 24a", 24b" based on a control input received from the input device assembly 102". In the illustrated embodiment, each electrical heating system 24a", 24b" includes an electrical heating device 26a", 26b", which may correspond to one of the electrical heating devices 26, 26' previously discussed, and a controller 100a", 100b" which may correspond to one of the controllers 100, 100' previously discussed. The control system 300 is configured such that each controller 100a", 100b" controls an electrical power supplied to the corresponding electrical heating device 26a", 26b" based on the control input so as to control the heat output of the corresponding electrical heating system 24a", 24b".

The heat output of the second heating system 24b" is remotely controlled via wireless communication based on the control input. In the illustrated embodiment, first heating system 24a" includes a wireless transmitter 303 in communication with the first controller 100a", and the second heating system 24b" includes a wireless receiver 304 in communication with the second controller 100b". The first heating system 24a" is configured to wirelessly transmit a control signal (represented by a dashed arrow in Figure 9) representative of the control input to the receiver 304 via the transmitter 303. The second controller 100b" is configured to control the electrical power supplied to the second electrical heating device 26b" based on the received control signal so as to control the heat output of the second heating system 24b".

Although the input device assembly 102" and transmitter 303 are depicted separately, in embodiments where the electrical heating system 24a" both receives inputs wirelessly and transmits to the second heating system 24b" wirelessly, a single wireless transceiver may in practice provide both functions.

The second heating system 24b" may be remotely controlled via wireless communication based on the control input via a suitable short-range wireless protocol, such as Bluetooth^{RTM}, Wi-Fi^{RTM}, or Zigbee^{RTM}, for example. I.e. the receiver 304 is capable of receiving instructions via one or more of these protocols. In alternative embodiments, the second heating system 24b" may be remotely controlled via wireless communication via any suitable means.

In the illustrated embodiment, the first heating system 24a" includes the input device assembly 102". The input device assembly 102" is configured to be mounted to the operator station member heated by the first heating system 24a". As such, the first heating system 24a" may be considered as a master controlling the second heating system 24b" acting as a slave. Advantageously, such a configuration enables the heating systems 24a", 24b" to be controlled via the single input device assembly 102", which may be located proximate an operator's hand, in use, if the operator station member is a hand-operated control member for example. In the illustrated embodiment, the input device assembly 102" is in wired communication with the first controller 100a" as represented by the solid arrows in Figure 9; i.e. a control signal representative of the control input is transmitted from the input device assembly 102" to the first controller 100a" through one or more wires and/or cables.

The first heating system 24a" includes an output device assembly 106", which may share the same or similar features to the output device assembly 106 previously discussed. Additionally or alternatively, the second heating system 24b" may include an output device assembly, which may share the same or similar features to the output device assembly 106. In alternative embodiments, none of the heating systems may include an output device assembly.

In this embodiment, the first and second heating systems 24a", 24b" are configured to heat external surfaces of first and second retrofittable operator station members respectively. For example, the first heating system 24a" may correspond to the heating system 24' for the cover assembly 204, and the second heating system 24b" may correspond to the heating system 24 for the spinner knob 14 in a vehicle such as a telehandler, backhoe loader, wheeled loader or tractor. Alternatively, the second heating system 24b" may correspond to another heating system 24' for another cover assembly 204 for joysticks 202 e.g. mounted to respective left and right hand sides of a seat of a vehicle such as an excavator or a skid steer loader, for example. By 'retrofittable operator station member' it is intended to mean an operator station member capable of being retrofitted to another operator station member, such as the spinner knob 14 to the steering wheel 12, or the cover assembly 204 to the control member 202, for example.

In embodiments in which the input device assembly 102" includes a wireless receiver which receives the control input from an external device and/or external server, the heat output of the first heating system 24a" and the second heating system 24b" may be remotely controlled via wireless communication based on the control input. When the control input is received from an operator-actuated input device (e.g. a switch) of the input device assembly 102", only the heat output of the second heating system 24b" is remotely controlled via wireless communication based on the controlled input.

In some embodiments, the transmitter 303 and receiver 304 may both be transceivers, thereby allowing the slave to signal the master, if, for example, its battery is low and requires recharging. This may then be displayed via the output device assembly 106" of the first heating system 24a".

Advantageously, the control system 300 enables at least one of the electrical heating systems 24a", 24b" to be remotely controlled via wireless communication, which may remove the need for complex wiring within the operator station 9. Moreover, the control system 300 may enable an operator to control the heating of one or more operator control members before they have entered the operator station 9 such that they have already achieved a desired temperature when operation of the vehicle 1 is to commence.

The control system 300 is configured to synchronously control the heat output of the heating systems 24a", 24b" based on the control input received from the input device assembly 102". Put another way, the control system 300 is configured to control the heat output of each heating system 24a", 24b" at substantially the same time after the control input is received. As such, an operator may only need to provide a single control input to synchronously heat multiple operator station members, making the process of heating the operator station members more time efficient.

In the illustrated embodiment, the control system 300 is configured to synchronously vary the heat output of the heating systems 24a", 24b" based on the control input. For example, the control system 300 may vary the heat output of the heating systems 24a", 24b" from a first heat output to a second, different, heat output.

The control system 300 may be configured to synchronously control the heat output of the heating systems 24a", 24b" based on the control input such that temperatures of the external surfaces of the corresponding operator station members are substantially the same. For example, each controller 100a", 100b" may be configured to determine a temperature of the corresponding external surface via a sensor similar to the sensor 104, as previously described. Moreover, each controller 100a", 100b" may be configured to control electrical power supplied to the corresponding electrical heating device 26a", 26b" based on the determined temperature of the external surfaces in order to heat the external surfaces to a set-point temperature received from the input device assembly 102", in a similar closed loop manner to that described previously.

In an alternative embodiment of the present teachings, one of the heating systems 24a", 24b" is configured to heat an external surface of a retrofittable operator station member, such as the heating system 24 for the spinner knob 14, or the heating system 24' for the cover assembly 204. The other of the heating systems 24a", 24b" is configured to heat an external surface of a non-retrofittable operator station member that is fixed to the vehicle 1, such as the seat 11, or the steering wheel 12 for example.

In the foregoing description, the first heating system 24a" includes the input device assembly 102". In alternative embodiments (not shown), the input device assembly 102" may be separate from the heating systems 24a", 24b". For example, the input device assembly 102" may be located elsewhere in the operator station 9, such as on the dashboard 10 for example, or may be located outside of the operator station 9, or may form part of a telematics system for the vehicle 1. In such embodiments, each heating system may include a wireless receiver 304 like the second heating system 24b". In the foregoing description, the control system 300 includes two electrical heating systems 24a", 24b".

In alternative embodiments (not shown), the control system 300 may include only one electrical heating system configured to heat an external surface of an operator station member. For example, the electrical heating system may correspond to either of the electrical heating systems 24, 24' previously discussed. In such embodiments, the heat output of the one heating system is remotely controlled via wireless communication based on the control input. The heating system may have a configuration similar to the first heating system 24a" in which the input device assembly 102" includes a wireless receiver to receive the control input, e.g. from an external device, such as a personal electronic device, and/or an external server.

Alternatively, the heating system may have a configuration similar to the second heating system 24b" and include a wireless receiver 304 by which to receive a control signal representative of the control input from the input device assembly 102", which may be separate from the heating system, as described above.

In the foregoing description, the control system 300 is configured such that the heat output of at least one of the electrical heating systems 24a", 24b" is remotely controlled via wireless communication based on the control input. In alternative embodiments (not shown), none of the electrical heating systems may be remotely controlled via wireless communication based on the control input. For example, the heat output of each electrical heating system may be controlled via wire communication. In such embodiments, at least one of the electrical heating systems may be remotely controlled via wired communication. The one or more embodiments are described above by way of example only and it will be appreciated that the variations are possible without departing from the scope of protection afforded by the appended claims.

## Claims

1. A cover assembly for a control member, such as a joystick, for controlling a vehicle, the control member comprising a shaft configured to be graspable by an operator's hand, the cover assembly comprising:
a cover body configured to encase the shaft, in use, and comprising an external surface; and
a heating system configured to heat the external surface of the cover body, the heating system comprising an electrical heating device, such as a heating element.

2. The cover assembly of claim 1, wherein the cover body is at least partially substantially rigid; optionally, wherein the cover body is formed from a substantially rigid, e.g. polymeric, material.

3. The cover assembly of claims 1 or 2, wherein the cover body comprises an opening for a head portion of the control member to extend therethrough.

4. The cover assembly of any preceding claim, wherein the cover body is formed from at least two cover sections configured to be secured together, for example releasably secured together, e.g. via one or more mechanical fasteners or clips, around the shaft so as to encase the shaft, in use; optionally, when dependent on claim 3, wherein the opening is formed when the at least two cover sections are secured together

5. The cover assembly of any preceding claim, wherein the cover body comprises a coupling arrangement configured to couple the cover body to the shaft, in use; optionally, wherein the coupling arrangement comprises one or more protrusions, each configured to be received in a corresponding recess in the control member so as to couple the cover body to the shaft, in use.

6. The cover assembly of any preceding claim, wherein the heating system comprises a controller configured to control electrical power supplied to the electrical heating device; optionally, wherein the controller is configured to control electrical power supplied to the electrical heating device based on an input received from an input device assembly, for example, comprising one or more buttons and/or one or more switches; optionally, wherein the cover body comprises the input device assembly.

7. The cover assembly of any preceding claim, wherein the cover body comprises a first portion configured to be grippable by an operator's hand, and a second portion configured to support an operator's hand gripping the first portion, in use, the second portion extending substantially radially outward from the first portion; optionally, when dependent on claim 6, wherein the controller is housed in the second portion.

8. The cover assembly of claim 7 when dependent on claim 6, wherein the controller is configured to control electrical power supplied to the electrical heating device based on an input received from an input device assembly, for example, comprising one or more buttons and/or one or more switches, and wherein the second portion comprises the input device assembly; optionally, wherein the second portion comprises a skirt, and wherein the skirt comprises the input device assembly.

9. A control member assembly comprising:
a control member, such as a joystick, for controlling a vehicle, the control member comprising a shaft configured to be graspable by an operator's hand; and
the cover assembly of any preceding claim encasing the shaft,
optionally, when dependent on claim 3, wherein the control member comprises a head portion extending from the shaft, and wherein the head portion extends through the opening; optionally, wherein the head portion comprises one or more input devices, such as one or buttons and/or one or more switches.

10. A control system for a vehicle comprising an operator station including one or more operator station members, such as a hand-operated control member, a seat, or an armrest, the control system comprising:
an input device assembly, for example, comprising one or buttons and/or one or more switches; and
one or more electrical heating systems, each configured to heat an external surface of an operator station member, in use,
wherein the control system is configured to control a heat output of each heating system based on a control input received from the input device assembly, and
wherein the heat output of at least one of the one or more heating systems is remotely controlled via wireless communication based on the control input.

11. The control system of claim 10, comprising a plurality of the heating systems, wherein the control system is configured to synchronously control the heat output of the heating systems based on the control input; optionally, wherein the control system is configured to synchronously vary the heat output of the heating systems based on the control input; optionally, wherein the control system is configured to vary the heat output of the heating systems from a first non-zero heat output to a second non-zero heat output.

12. The control system of claim 11, wherein one of the heating systems comprises the input device assembly, and wherein the input device assembly is configured to be mounted to, or adjacent to, the corresponding operator station member.

13. The control system of any one of claims 10 to 12, wherein the input device assembly comprises a wireless receiver configured to receive control inputs from an external device, such as a personal electronic device, e.g. a mobile phone or a tablet, and/or an external server.

14. The control system of any one of claims 10 to 13, wherein the at least one of the one or more heating systems is remotely controlled based on the control input via a short-range wireless protocol, such as Bluetooth^{RTM}, Wi-Fi^{RTM}, or Zigbee^{RTM}.

15. A vehicle comprising:
the control system of any one of claims 10 to 14; and
an operator station comprising a plurality of operator station members, each having an external surface,
wherein each heating system is configured to heat the external surface of one of said operator station members;
optionally, wherein the vehicle is a working machine, for example, wherein the working machine is for use in off-highway industries such as agriculture and construction, and/or, when dependent on claims 11 or 12, wherein the control system is configured to synchronously control the heat output of the heating systems based on the control input such that temperatures of the external surfaces of the corresponding operator station members are substantially the same.
